# EUROPEAN PATENT APPLICATION

(11) **EP 3 467 152 A1**
(43) Date of publication of application: **10.04.2019**
(21) Application number: 17806829.2
(22) Date of filing: 02.06.2017
(51) Int. Cl.: C25D 5/44, B32B 15/01, C23C 18/18, C25D 5/30, H01R 13/03

(54) **SURFACE TREATMENT MATERIAL, PRODUCTION METHOD THEREOF, AND COMPONENT FORMED USING SURFACE TREATMENT MATERIAL**

(30) Priority: 03.06.2016 JP 2016112181
(71) Applicant: Furukawa Electric Co., Ltd., Chiyoda-ku Tokyo 100-8322 (JP)
(72) Inventor: YAMAUCHI Miho, Tokyo 100-8322 (JP); KITAGAWA Shuichi, Tokyo 100-8322 (JP); KOBAYASHI Yoshiaki, Tokyo 100-8322 (JP)
(74) Representative: Zacco GmbH
(86) International application number: PCT/JP2017/020612
(87) International publication number: WO 2017/209279

(57) **Abstract**

The present invention provides a surface-treated material and the like, which inhibits deterioration of characteristics on the surface of a surface treatment film, in particular, contact resistance and solder wettability in high-temperature (for instance, 200°C) use environment, without deteriorating bending workability.

A surface-treated material (1) of the present invention has a conductive substrate (2), and a surface treatment film (4) which includes at least one layer of metal layers and is formed on the conductive substrate (2), wherein the surface treatment film (4) is a plating film; is formed on a whole surface or a part of the conductive substrate (2) through a zinc-containing layer (3) that contains zinc as a main component and has a thickness of 50 nm or less, or is formed on the conductive substrate (2) without through the zinc-containing layer (3); and a ratio of a contact area to a test area is 85% or more as measured according to a tape test method defined in JIS H 8504: 1999.

## Description

### Technical Field

The present invention relates to a surface-treated material, a method for producing the surface-treated material, and a component formed by using the surface-treated material, and particularly relates to a technology that simply forms a surface treatment film which includes at least one layer of metal layers and has an adequate adhesiveness, on an conductive substrate which is mainly formed of a base metal having a large ionization tendency and is considered to be difficult to form a sound plating film thereon.

### Background Art

For a material to be plated (conductive substrate) which is used for forming a conventional electrical contact and the like, metal materials such as copper, copper alloys, iron and iron alloys have been widely used, from the viewpoint of being inexpensive and having comparatively excellent characteristics. Since such metal materials are satisfactory particularly in conductivity and workability, are comparatively easily available, in addition, is easily to apply coating treatment on its surface, and have a surface excellent in plating adhesiveness, the metal materials are still used as mainstream materials for the conductive substrate.

However, copper (specific gravity of 8.96) and iron (specific gravity of 7.87) are materials each having a comparatively high specific gravity, and accordingly, for instance, in a wire harness for automobiles and bodywork of an aircraft, materials such as aluminum (specific gravity of 2.70) and magnesium (specific gravity of 1.74) each having a comparatively low specific gravity have been increasingly used in recent years in place of copper and iron.

By the way, it is considered that a method of plating the surface of the aluminum which is referred to as a light metal among metals is complicated, and besides that it is difficult for aluminum to form a plating film with adequate adhesiveness thereon. There are such factors of causing the above phenomenon that aluminum is apt to form an oxide film called a passivation film on its surface, this oxide film exists in a stable state, and it is difficult for a base metal such as aluminum to be plated in a wet process.

In order to inhibit the formation of an oxide film on the surface of the aluminum-based substrate, conventionally, such measures have been taken as to cover the surface of the substrate with a metal such as tin, and keep the contact resistance or inhibit the increase thereof (for instance, Patent Literature 1 and the like).

In addition, in the case where an underlying layer such as a nickel layer which is formed for the purpose of improving plating adhesiveness and a covering layer which is formed of a metal (tin, silver and the like) for electric contact are sequentially formed on the surface of an aluminum-based substrate , for instance, by a wet plating method, even if the underlying layer is formed on the surface of the substrate and then the covering layer is formed on the underlying layer, sufficient adhesiveness cannot be usually obtained due to an oxide film present on the surface of the substrate.

Thus, conventionally, a pre-treatment has been carried out for enhancing an adhesive strength between the substrate and the plating film (underlying layer and covering layer), by conducting zinc substitution treatment which is referred to as zincate treatment, with the use of a solution containing zinc, before forming the underlying layer and the covering layer (for instance, Patent Literature 2).

In Patent Literature 3, an electronic component material is described which is a plated aluminum alloy, and it has been considered to be preferable that a certain amount or more of a zinc layer exists for providing a sufficient bonding force. It is described that the substrate may be plated without forming the zinc layer thereon, but the production method is not clearly stated. Accordingly, the effect is not examined which is obtained when the zinc layer is reduced to the extreme or when the zinc layer is not formed.

In addition, in Patent Literature 4, such a method is described as to perform a pre-treatment for forming fine etched recesses on the surface of the substrate by etching with an active acid treatment liquid, and enhance an adhesive strength by an anchor effect due to the formed fine etching recesses. However, there has been a problem that bending workability deteriorates because the unevenness of 5 to 10 µm becomes a stress concentration point at the time of deformation.

Generally, in a plating film which has been formed after the zincate treatment is performed on the surface of the aluminum substrate , the zinc layer which has been formed to have a thickness of, for instance, approximately 100 nm is interposed between the substrate and the plating film, and the plating layer (plating film) is formed on this zinc layer; and accordingly when heated, zinc in the zinc layer is consequently diffused in the plating layer and is further diffused up to and appears on the surface layer of the plating layer. As a result, such various problems arise that a contact resistance results in increasing, wire bonding properties are lowered and solder wettability is lowered. In motors of trains and electric locomotives, in particular, it has been studied to change metal of winding wires to aluminum so as to reduce the weight, but the wire reaches 160°C depending on the portion, and accordingly it is necessary to improve the heat resistance of a plating film which has been formed on the surface of the conductor. A large-sized bus bar and the like show a great effect of reduction in weight due to the change to aluminum. These are produced by welding several components, but the temperature in the vicinity of the welded portion becomes high, and accordingly a plating film having a higher heat resistance is required.

In addition, in recent years, sudden heavy rain has increased, and when struck by lightning, a large current instantaneously flows, and heat which is generated by Joule heat at the time is said to be 180°C or higher. Heat resistance is necessary for a conductor which is used in a power distribution board and the like. Furthermore, aluminum has been progressively used for a wire harness of automobiles, and a heat resistance of 150°C is required in the periphery of an engine and the periphery of a high power motor. From such a background in recent years, the plating is required which does not cause deterioration in adhesiveness and an increase in contact resistance even when being held at 200°C for 24 hours in an accelerated test.

Furthermore, in some states of the zinc layer formed in the zincate treatment, there have been cases where plating defects often occur such as the formation of bumps in the subsequent plating and precipitation abnormality.

Still furthermore, in a drone and a wearable device, there is a possibility that rain and sweat get inside the device, and high corrosion resistance is required also in order that long-term reliability is ensured. The same applies to motors and inverters of an electric transformer in a salt water environment such as wind-power generation. However, if the plating layer (underlying layer) which is formed after the zinc substitution treatment is thinly formed, it is difficult to completely cover the zinc-containing layer due to the formation of a non-uniform plating layer and the formation of pinholes, and there is a problem that erosion preferentially proceeds along the zinc-containing layer in the salt water environment, and that as a result, peeling occurs between the underlying layer and the substrate.

Thus, in order that the above described problem does not occur, it is desirable not to allow the zinc layer to exist between the substrate and the plating film, and when it is necessary to form the zinc layer, it is desirable to form a zinc layer having a thickness as thin as possible.

As for a method of plating a substrate of aluminum without through the zinc layer, for instance, in Patent Literature 5, it is described that aluminum or an aluminum alloy can be electroless nickel plated by using a nickel plating liquid which contains a hydrofluoric acid and/or a salt thereof, a nickel salt and water. However, in the electroless nickel plating, nickel precipitated disorderly, mismatch among lattices became large, and accordingly sufficient adhesiveness could not be obtained.

In addition, it is general to use a nickel-based plating layer as the underlying layer, and the nickel-based plating layer is formed mainly with the intention of enhancing the adhesiveness and inhibiting the diffusion of zinc in the zinc layer. However, the nickel-based plating layer is usually harder than the aluminum-based substrate, and accordingly there are problems that if the thickness of the nickel-based plating layer is formed excessively thick in order to inhibit the diffusion of zinc, the nickel-based plating layer (film) cannot follow the deformation of the aluminum-based substrate, when a bending work has been applied to the plating layer in a step of producing a terminal, cracks easily occur, and corrosion resistance is also inferior.

Furthermore, in recent years, the miniaturization of electronic components and the like has progressed, and bendability under severer conditions is required. For instance, when aluminum is used in bus bars and electric wires, it is necessary to increase the cross-sectional area so as to match the resistances of the conductors. When the conductors are subjected to a bending work which does not change the inner bending radius, the conductor having a larger cross-sectional area results in showing a larger tensile strain on the outer side of the bent part, and tends to easily cause cracks on the plating surface.

In addition, also in the field where aluminum has already been used, for instance, in the bus bar for automobiles, miniaturization is required; and it is required that cracks do not occur in the plating, even if the bus bar has been subjected to working such as bending, twisting and shearing which are under severer conditions than before. Furthermore, also in the latest applications such as drones and wearables in which light weight is required, it is being studied to change the material to aluminum from copper and steel, but even if the components are subjected to severe working in order to be miniaturized, it is required that cracks do not occur on the plating surface. In these applications, such problems have also arisen that cracks result in occurring when the nickel-based plating which has been used for inhibiting the diffusion of zinc has a conventional thickness.

### Document List

### Patent Documents

Patent Document 1: Japanese Laid-Open Patent Publication No. 2014-63662
Patent Document 2 Japanese Laid-Open Patent Publication No. 2014-47360
Patent Document 3: Japanese Laid-Open Patent Publication No. 2012-087411
Patent Document 4: Japanese Laid-Open Patent Publication No. 2002-115086
Patent Document 5: Japanese Laid-Open Patent Publication No. 2011-99161

### Summary of Invention

### Technical Problem

Then, an object of the present invention is to provide a surface-treated material that can have a surface treatment film having adequate adhesiveness simply formed on a conductive substrate which is mainly formed of a base metal particularly having a large ionization tendency such as aluminum and an aluminum alloy, and is considered to be difficult to form a sound plating film thereon, and besides that inhibits the deterioration of characteristics on the surface of the surface treatment film, which are adhesiveness, contact resistance and solder wettability particularly in high-temperature (for instance, 200°C) use environment, in comparison with a conventional surface-treated material in which a zinc layer (in particular, zincate treatment layer) having a thickness, for instance, of approximately 100 nm is interposed between the substrate and the plating film, without deteriorating moldability such as bending workability; a method for producing the surface-treated material; and a component that is formed by using the surface-treated material.

### Solution to Problem

The present inventors have made an extensive investigation on the above described problem, and as a result; have found that a surface-treated material which exhibits excellent plating adhesiveness and adequate characteristics after plating can be provided by forming a surface treatment film on an conductive substrate which is mainly formed of a base metal in an appropriately multilayered state; and thereby have reached the present invention.

Specifically, the summary and the constitution of the present invention are as follows.
(1) A surface-treated material has a conductive substrate, and a surface treatment film which includes at least one layer of metal layers and is formed on the conductive substrate, wherein the surface treatment film is a wet plating film; is formed on a whole surface or a part of the conductive substrate through a zinc-containing layer that contains zinc as a main component and has a thickness of 50 nm or less, or is formed on the conductive substrate without through the zinc-containing layer; and a ratio of a contact area to a test area is 85% or more as measured according to a tape test method defined in JIS H 8504: 1999.
(2) A surface-treated material has a conductive substrate, and a surface treatment film which includes at least one layer of metal layers and is formed on the conductive substrate, wherein in cross-sectional observation of the surface-treated material, when portions between a portion of the conductive substrate and a portion of the surface treatment film are subjected to a line analysis with the use of STEM-EDX, and an obtained profile of detection intensity of each component of the surface-treated material is viewed, a maximum value of an intensity ratio of zinc to a main component of the surface treatment film is 1/4 or less, in a specific analysis range in which the intensity of the main component of the surface treatment film is equal to or higher than the intensity of the main component of the conductive substrate; and a ratio of a contact area to a test area is 85% or more as measured according to a tape test method defined in JIS H 8504: 1999.
(3) The surface-treated material according to the above described (1) or (2), wherein the conductive substrate is aluminum or an aluminum alloy.
(4) The surface-treated material according to any one of the above described (1) to (3), wherein each of the metal layers forming the surface treatment film is formed of any one selected from the group consisting of nickel, a nickel alloy, cobalt, a cobalt alloy, copper, a copper alloy, tin, a tin alloy, silver, a silver alloy, gold, a gold alloy, platinum, a platinum alloy, rhodium, a rhodium alloy, ruthenium, a ruthenium alloy, iridium, an iridium alloy, palladium, and a palladium alloy.
(5) The surface-treated material according to any one of the above described (1) to (4), wherein the surface treatment film includes two or more metal layers.
(6) A method for producing a surface-treated material according to any one of the above described (1) to (5) includes: a first surface activation treatment step of treating a surface of the conductive substrate, with the use of an activation treatment liquid that contains 10 to 500 mL/L of any one acid solution which is selected from among sulfuric acid, nitric acid, hydrochloric acid, hydrofluoric acid and phosphoric acid, and 0.1 to 500 g/L (in terms of metal content of nickel or cobalt) of nickel compounds which include nickel sulfate, nickel nitrate, nickel chloride and nickel sulfamate, or cobalt compounds which include cobalt sulfate, cobalt nitrate, cobalt chloride and cobalt sulfamate, at a treatment temperature of 20 to 60°C, at a current density of 0.5 to 20 A/dm², and for a treatment time period of 1 to 300 seconds, prior to forming the surface treatment film on the conductive substrate by a wet plating method.
(7) The method for producing the surface-treated material according to the above described (6) further includes: a second surface activation treatment step of temporarily forming a zinc-containing thick film layer having a thickness of 100 nm or more on the surface of the conductive substrate by a zinc substitution method, then dissolving the zinc-containing thick film layer in a range of 50 nm or more, and thereby reducing the thickness to a range of 50 nm or less to form the zinc-containing layer, or completely removing the zinc-containing thick film layer, prior to performing the first surface activation treatment step.
(8) A terminal formed with the use of the surface-treated material according to any one of the above described (1) to (5).
(9) A connector formed with the use of the surface-treated material according to any one of the above described (1) to (5).
(10) A bus bar formed with the use of the surface-treated material according to any one of the above described (1) to (5).
(11) A lead frame formed with the use of the surface-treated material according to any one of the above described (1) to (5).
(12) A medical member formed with the use of the surface-treated material according to any one of the above described (1) to (5).
(13) A shield case formed with the use of the surface-treated material according to any one of the above described (1) to (5).
(14) A coil formed with the use of the surface-treated material according to any one of the above described (1) to (5).
(15) A contact switch formed with the use of the surface-treated material according to any one of the above described (1) to (5).

### Effects of Invention

According to the present invention, there can be provided a surface-treated material that has a conductive substrate, in particular, a conductive substrate which is, for instance, aluminum or an aluminum alloy which is mainly formed of a base metal having a large ionization tendency and is considered to be difficult to form a sound plating film thereon, and a surface treatment film which includes at least one layer of metal layers and which is formed on the conductive substrate; by that the surface treatment film is a wet plating film, is formed on the whole surface or a part of the conductive substrate through a zinc-containing layer which contains zinc as a main component and has a thickness of 50 nm or less, or is formed on the conductive substrate without through the zinc-containing layer, and a ratio of a contact area to a test area is 85% or more as measured according to a tape test method defined in JIS H 8504: 1999, can inhibit deterioration in characteristics on the surface of the surface treatment film, in particular, deterioration in adhesiveness, contact resistance and solder wettability in high-temperature (for instance, 200°C) use environment, without deterioration in bending workability, in comparison with a conventional surface-treated material in which a zinc-containing layer (in particular, zincate treatment layer) having a thickness, for instance, of approximately 100 nm between the substrate and the plating film; and as a result, has high long-term reliability while keeping characteristics after the surface treatment film has been formed: a method for producing the same: and various components that are formed by using the surface-treated material.

### Brief Description of Drawings

Fig. 1 is a schematic sectional view of a surface-treated material which is a first embodiment according to the present invention.
Fig. 2 is a schematic sectional view of a surface-treated material which is a second embodiment.
Fig. 3 is a schematic sectional view of a surface-treated material which is a third embodiment.
Fig. 4 is a schematic sectional view of a surface-treated material which is a fourth embodiment.
Fig. 5 is a view for describing a method of conducting a line analysis on portions between a portion of a conductive substrate and a portion of a surface treatment film with the use of STEM-EDX, in a cross-sectional observation of a surface-treated material.

### Description of the Embodiments

Thereafter, embodiments according to the present invention will be described below with reference to the drawings.

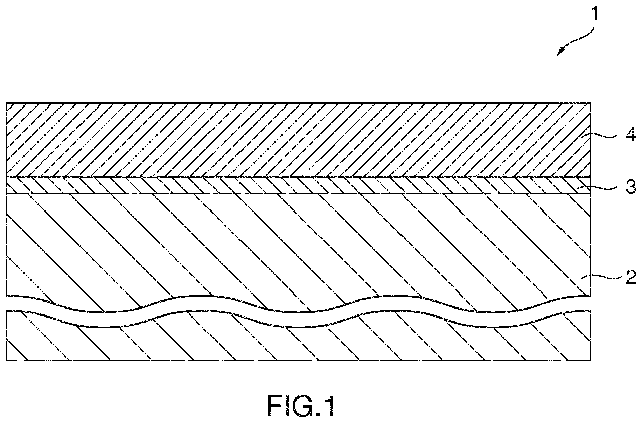

Fig. 1 shows a schematic sectional view of a surface-treated material of a first embodiment.

The case is shown in which the illustrated surface-treated material 1 has a conductive substrate 2 and a surface treatment film 4, and further has the zinc-containing layer 3 formed between the conductive substrate 2 and the surface treatment film 4.

### (Conductive substrate)

The conductive substrate 2 is not limited in particular, but is preferably mainly formed of any of base metals having, for instance, a large ionization tendency, and among them, for instance, aluminum (Al) or an aluminum alloy which is difficult to have a sound plating film formed thereon with the use of a wet plating method, in a point that the conductive substrate can remarkably exhibit an effect of the present invention. Furthermore, in the drawing, the shape of the conductive substrate 2 is illustrated by an example of a strip, but may be a form of a plate, a wire, a rod, a pipe, a foil or the like, and various shapes can be adopted according to the application.

### (Surface treatment film)

The surface treatment film 4 is formed on the conductive substrate 2, and includes at least one layer of metal layers.

Each of the metal layers forming the surface treatment film 4 can be formed of a metal or an alloy which is appropriately selected from among, for instance, nickel (Ni), a nickel alloy, cobalt (Co), a cobalt alloy, copper (Cu), a copper alloy, tin (Sn), a tin alloy, silver (Ag), a silver alloy, gold (Au), a gold alloy, platinum (Pt), a platinum alloy, rhodium (Rh), a rhodium alloy, ruthenium (Ru), a ruthenium alloy, iridium (Ir), an iridium alloy, palladium (Pd), a palladium alloy, according to purposes of imparting desired characteristics. For instance, when the surface treatment film 4 is formed of an intermediate layer (underlying layer) and a covering layer, a surface-treated material (plated material) excellent in long-term reliability can be obtained by: forming one or more metal layers as an intermediate layer, which are formed of a metal or an alloy selected from nickel, a nickel alloy, cobalt, a cobalt alloy, copper, a copper alloy, silver and a silver alloy, on the conductive substrate 2 that has been subjected at least to a first surface activation treatment step which will be described later; and then, forming a single layer or a plurality of metal layers on the intermediate layer, which are formed of a metal or an alloy selected from tin, a tin alloy, silver, a silver alloy, gold, a gold alloy, platinum, a platinum alloy, rhodium, a rhodium alloy, ruthenium, a ruthenium alloy, iridium, an iridium alloy, palladium and a palladium alloy, as a covering layer for imparting functions. The number of metal layers forming the surface treatment film 4 is not limited in particular, and can be appropriately selected as needed. In particular, the surface treatment film 4 preferably includes two or more metal layers that include: at least a metal layer formed for the purpose of improving the adhesiveness to the substrate, and the like, as an intermediate layer (underlying layer); and a metal layer for imparting functions, as a covering layer. For instance, by forming a nickel layer as an intermediate layer and then forming a gold plating layer as a covering layer for imparting functions, the surface treatment film 4 excellent in corrosion resistance can be provided. In addition, the surface treatment film 4 is a wet plating film.

### (Characteristic constitution of the present invention)

The characteristic constitution of the present invention exists in simply forming the surface treatment film 4 having the adequate adhesiveness to the conductive substrate 2, and more specifically, exists in that the surface treatment film 4 is a wet plating film, is formed on the whole surface or a part of the conductive substrate 2 through a zinc-containing layer 3 which contains zinc as a main component and has a thickness of 50 nm or less, or is formed on the conductive substrate without through the zinc-containing layer, and has a ratio of a contact area to a test area of 85% or more, which is measured according to a tape test method defined in JIS H 8504: 1999. By adopting this constitution, the surface treatment film 4 can inhibit the deterioration of characteristics on the surface of the surface treatment film, in particular, the adhesiveness, contact resistance and solder wettability in high-temperature (for instance, 200°C) use environment, without deteriorating moldability such as bending workability, in comparison with a conventional surface-treated material in which a zinc-containing layer (particularly, zincate treatment layer) having a thickness, for instance, of approximately 100 nm is interposed between the substrate 2 and the surface treatment film 4 that is a plating film.

By the way, it is general that the conductive substrate 2, in particular, the conductive substrate 2 that is a base metal having a large ionization tendency, such as aluminum or an aluminum alloy, is subjected to substitution treatment by zinc as a usual method, which is so-called zincate treatment. In the conventional zincate treatment, the thickness of the zinc-containing layer which exists between the substrate and the surface treatment film (a plating film) is, for instance, approximately 100 nm; when zinc in the zinc-containing layer is diffused in the surface treatment film and is further diffused up to and appears on the surface layer of the surface treatment film, when, for instance, the surface-treated material is used as an electric point, the zinc causes a problem of resulting in increasing a contact resistance, and further various problems of lowering wire bonding properties, lowering solder wettability and lowering corrosion resistance; and as a result, there has been a case in which the characteristics of the surface-treated material deteriorate due to use, and the long-term reliability is impaired.

In addition, there have been problems that if the thickness of the nickel-based plating layer is controlled to be excessively thick in order to inhibit the diffusion of zinc, when a bending work has been applied in a step of producing a terminal, the nickel-based plating layer (film) cannot follow the deformation of the aluminum-based substrate, cracks easily occur, and corrosion resistance is also inferior.

Furthermore, if the nickel-based plating layer is thinly formed, it is difficult to completely cover the zinc-containing layer due to the formation of a non-uniform plating layer and the formation of pinholes, and there has been a problem that erosion preferentially proceeds along the zinc-containing layer in the salt water environment, and that peeling consequently occurs between the nickel-based plating layer and the substrate.

Thus, it is desirable to allow the zinc-containing layer not to exist between the substrate 2 and the surface treatment film 4, but in the conventional film forming technique, unless the zinc-containing layer (in particular, zincate treatment layer) exists, it has been considered difficult to form a surface treatment film (plating film) having adequate adhesiveness to the conductive substrate 2, in particular, the conductive substrate 2 which is a base metal having a large ionization tendency.

Then, the present inventors made an extensive investigation, and found that: by subjecting a surface of the conductive substrate 2 (for instance, aluminum substrate) to a new first surface activation treatment step, prior to the formation of the surface treatment film (plating film) 4, it is possible to effectively remove the oxide film which stably exists on the surface of the conductive substrate 2, even without forming a conventional zinc-containing layer (in particular, zincate treatment layer), and accordingly even though the surface treatment film (for instance, nickel plating layer) is directly formed on the conductive substrate, metal atoms (for instance, nickel atoms) forming the surface treatment film can directly bond to metal atoms (for instance, aluminum atoms) forming the conductive substrate without through oxygen atoms; and as a result, it is possible to simply form the surface treatment film 4 having the adequate adhesiveness on the conductive substrate 2.

In addition, the reason why a ratio of a contact area to a test area has been determined to be 85% or more as measured according to a tape test method defined in JIS H 8504:1999, is because when the contact area is less than 85%, not only the adhesiveness is inferior in comparison with that of the conventional surface-treated material on which the zinc-containing layer (in particular, zincate treatment layer) is formed, but also the advantage of the adhesiveness becomes unremarkable in comparison with the conventional surface-treated material formed using other plating methods other than the zinc zincate treatment method, and deterioration in the adhesiveness, the contact resistance and the solder wettability in high-temperature (for instance, 200°C) use environment cannot be also sufficiently inhibited.

Incidentally, in the present invention, most of the oxide film which exists on the surface of the conductive substrate 2 can be removed by conducting the first surface activation treatment step, but even if a part of the oxide film partially remains on the surface of the conductive substrate 2, such a degree does not aggregate the adhesiveness so much, and accordingly such a case is also included within the scope of the present invention.

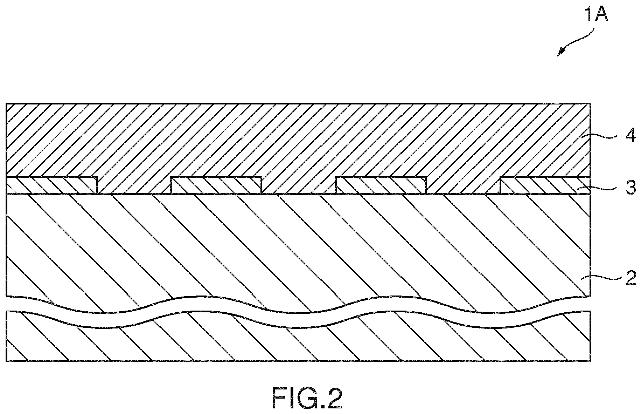

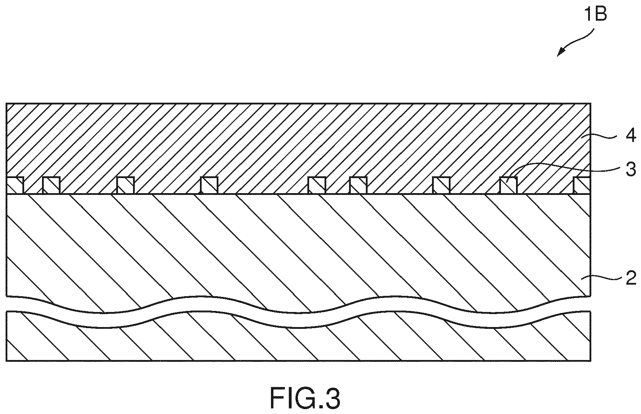

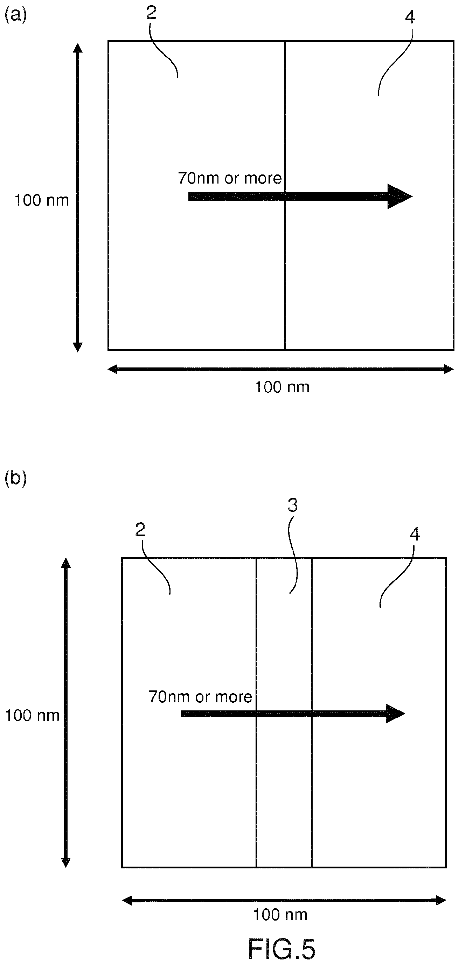

Incidentally, in the present invention, it shall be recognized that the surface-treated material is "formed on the conductive substrate without through the zinc-containing layer", in the case where when in a cross-sectional observation of the surface-treated material, portions between a portion of the conductive substrate and a portion of the surface treatment film are subjected to a line analysis with the use of STEM-EDX, and when an obtained profile of detection intensity of each component of the surface-treated material is viewed, the maximum value of an intensity ratio of zinc to a main component of the surface treatment film is 1/4 or less, in a specific analysis range in which the intensity of the main component of the surface treatment film is equal to or higher than the intensity of the main component of the conductive substrate. Specifically, it shall be recognized that the surface-treated material is formed on the conductive substrate without through the zinc-containing layer, in the case where the number is 0, which is obtained by the processes of: determining five points aligned on a straight line at intervals of 50 µm in two different positions, at arbitrary points of the conductive substrate, for instance, in the cross-sectional observation of the surface-treated material; subjecting each of the ten points to FIB processing; then subjecting an area of 100 nm × 100 nm to the surface analysis with the use of STEM-EDX and with a resolution of 1 nm/pixel or more so that the interface between the conductive substrate and the surface treatment film comes to the vicinity of the center (see Fig. 5(a) and Fig. 5(b)); further subjecting a range of 70 nm or more from the conductive substrate side to the surface treatment film side in the central portion of the above obtained composition mapping image, to a line analysis; thereby obtaining the profile of the detection intensity of each component of the surface-treated material; and counting the number of times in the profile when the maximum value of the intensity ratio of the zinc to the main component of the surface treatment film exceeds 1/4, in such a range (specific analysis range) that the intensity of the main component of the surface treatment film is equal to or higher than the intensity of the main component of the conductive substrate. Incidentally, even when the surface-treated material is "formed on the conductive substrate through the zinc-containing layer", there is a case where the zinc-containing layer exists only in a part of the surface of the conductive substrate (Fig. 2 and Fig. 3); in this case, if an area in which the zinc-containing layer does not exist is subjected to the line analysis, there is a possibility that the maximum of the intensity ratio of the zinc to the main component of the surface treatment film becomes 1/4 or less; and accordingly the present measurement shall be conducted at 10 spots in the specific analysis range.

In addition, the present inventors found also that even in the case where the surface of the conductive substrate is subjected to a second surface activation treatment step which uses a zinc substitution method, prior to conducting a first surface activation treatment step, a thin zinc-containing layer having a thickness of 50 nm or less is formed on the whole surface or a part of the conductive substrate, and the surface treatment film is indirectly formed through the zinc-containing layer, zinc in the zinc-containing layer is inhibited from being diffused to the outermost surface of the surface covering layer by the first surface activation treatment step conducted after that, because an absolute amount of zinc which exists on the surface of the conductive substrate 2 is small in comparison with that in the conventional surface-treated material in which a thick (for instance, approximately 100 nm) zinc-containing layer exists, and also the surface treatment film 4 having the adequate adhesiveness can be simply formed on the conductive substrate 2.

### (Zinc-containing layer)

As has been described above, in the present invention, the zinc-containing layer 3 can be formed between the conductive substrate 2 and the surface treatment film 4, as needed. However, the thickness of the zinc-containing layer 3 is controlled preferably to be 50 nm or less, more preferably to be 30 nm or less, and further preferably to be 1 nm or more and 15 nm or less. This is because if the thickness of the zinc-containing layer 3 is formed so as to be more than 50 nm, the absolute amount of zinc increases which exists on the surface of the conductive substrate 2, accordingly zinc diffuses in the surface treatment film 4, the zinc reaches the outermost surface layer of the surface treatment film 4, and thereby becomes easy to form zinc oxide and the like; and thereby an increase in contact resistance and deterioration in solder wettability become easy to occur during use, and long-term reliability is impaired. Incidentally, in the present invention, from the viewpoint of keeping the long-term reliability, it is preferable that the zinc-containing layer 3 does not exist between the conductive substrate 2 and the surface treatment film 4, and even though the zinc-containing layer 3 exists, it is most preferable that the layer is thinner than 1 nm.

In addition, the zinc-containing layer 3 is a layer which contains zinc as a main component, specifically, is a layer which contains 50 to 100% by mass of zinc. Specific examples of the zinc-containing layer 3 include a zinc layer which is formed by a zinc substitution treatment (zincate treatment), and a zinc alloy layer such as a zinc-copper alloy and a zinc-iron alloy.

The surface-treated materials shown in Figs 1 to 4 show several embodiments of the present invention.

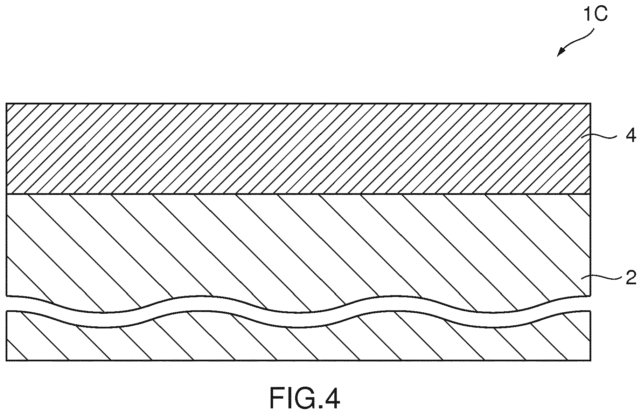

Fig. 1 shows a case in which the zinc-containing layer 3 is formed between the conductive substrate 2 and the surface treatment film 4, uniformly over the whole surface of the conductive substrate 2. In addition, both of Fig. 2 and Fig. 3 show a case in which the zinc-containing layer 3 is partially formed on the surface of the conductive substrate 2, and the surface of the conductive substrate 2 is not completely covered; Fig. 2 shows a case in which an existence ratio of the zinc-containing layer 3 covering the surface of the conductive substrate 2 is controlled to be large; and Fig. 3 shows a case in which an existence ratio of the zinc-containing layer 3 covering the surface of the conductive substrate 2 is controlled to be small, and the zinc-containing layer 3 is formed in an island-shaped pattern. Incidentally, as in embodiments shown in Fig. 2 and Fig. 3, the thickness of the zinc-containing layer 3 in the case in which the zinc-containing layer 3 is partially formed on the surface of the conductive substrate 2 shall be a thickness that is measured in a portion corresponding to the zinc-containing layer which exists partially on the surface of the conductive substrate 2; and in the present invention, it is necessary to adjust the thickness of the portion corresponding to the zinc-containing layer to 50 nm or less. Furthermore, Fig. 4 shows a case in which the zinc-containing layer 3 does not exist between the conductive substrate 2 and the surface treatment film 4, and the surface treatment film 4 is directly formed on the conductive substrate 2. Incidentally, the thickness of the zinc-containing layer 3 was measured by: measuring arbitrary five points in a collimator diameter of 200 µm with a fluorescent X-ray measuring apparatus (for instance, SFT 9400: Hitachi High-Technologies Corporation (made by former Seiko Instruments Inc.); and calculating an average value thereof. Incidentally, as for what shape the shape of the zinc-containing layer 3 is formed in, it is possible to determine the shape by preparing a cross-sectional sample with the use of, for instance, an FIB (Focused Ion Beam) apparatus, and then directly observing the interface with a TEM apparatus, for instance, with a magnification of 50,000 times.

### (Method for producing surface-treated material)

Thereafter, several embodiments of the method for producing the surface-treated material according to the present invention will be described below.

In order to produce a surface-treated material having a cross-sectional layer structure shown in Fig. 4, for instance, it is acceptable to sequentially subject a plate material, a rod material or a wire material that is a substrate of aluminum (for instance, 1000 series of aluminum such as A1100 which is defined in JIS H 4000: 2014, and an aluminum alloy (for instance, 6000(Al-Mg-Si) series alloy such as A6061 which is defined in JIS H 4000: 2014), to an electrolytic degreasing step, a first surface activation treatment step and a surface treatment film forming step, or an electrolytic degreasing step, a second surface activation treatment step (zinc-containing thick film layer forming and removing step), a first surface activation treatment step and a surface treatment film forming step; and in addition, in order to produce a surface-treated material having a cross-sectional layer structure shown in Figs 1 to 3, for instance, it is acceptable to sequentially subject the substrate to an electrolytic degreasing step, a second surface activation treatment step (zinc-containing layer forming step), a first surface activation treatment step, and a surface treatment film forming step. In addition, it is preferable to further conduct a rinsing step between the above described steps, as needed.

### (Electrolytic degreasing step)

The electrolytic degreasing step includes a method of immersing the substrate in an alkaline degreasing bath of, for instance, 40 to 100 g/L sodium hydroxide (NaOH), setting the above described substrate as a cathode, and subjecting the substrate to cathodic degreasing under conditions of a current density of 2.5 to 5.0 A/dm², a bath temperature of 60°C and a treatment time period of 10-60 seconds.

### (Second surface activation treatment step)

The second surface activation treatment step is a step which is conducted by using a zinc substitution method (zincate treatment), and in the case where the surface-treated material having the cross-sectional layer structure is produced in which the zinc-containing layer does not exist as is shown in Fig. 4, the step can be omitted. Incidentally, even in the case where the surface-treated material shown in Fig. 4 is produced, the second surface activation treatment step may be conducted, but in this case, the second surface activation treatment step is a step of forming the zinc-containing thick film layer and removing the zinc-containing thick film layer by the dissolution. In addition, in the case where a surface-treated material is produced in which the zinc-containing layer exists as is shown in Figs 1 to 3, the second surface activation treatment step is a step of forming the zinc-containing layer by forming the zinc-containing thick film layer and partially dissolving the thick layer, and in this case, the step becomes an essential step.

The zinc-containing thick film layer can be formed on the basis of the zinc substitution bath composition and treatment conditions, for instance, shown in Table 1.

**[Table 1]**

| Zinc substitution treatment | | | |
|---|---|---|---|
| Zinc substitution bath composition | | Treatment conditions | |
| Com ponent | Concentration (g/L) | | |
| NaOH | 500 | Immersion treatment | |
| ZnO | 100 | Bath temperature: room temperature | |
| Tartaric acid (C₄H₆O₆) | 10 | Treatment time period: 1 to 300 seconds | |
| FeCl₂ | 2 | | |

In the second surface activation treatment step, it is preferable, for instance, to temporarily form the zinc-containing thick film layer having a thickness of 100 nm or more on the surface of the conductive substrate by a zinc substitution method, then to dissolve the above described zinc-containing thick film layer in a range of 50 nm or more, and thereby to reduce the thickness thereof to a range of 50 nm or less to form the above described zinc-containing layer, or to completely remove the zinc-containing thick film layer. Incidentally, it is possible to form a thin zinc-containing layer of 50 nm or less, not by forming the zinc-containing thick film layer of 100 nm or more and then dissolving the zinc-containing layer to form a zinc-containing layer as in the second surface activation treatment step of the present invention, but by simply conducting the zinc substitution treatment for a short time; however, the method is not preferable because when the treatment time period is short, the peeling of the surface treatment film (plating film) which is formed thereafter becomes easy to occur. Incidentally, the upper limit of the thickness of the zinc-containing thick film layer is not limited in particular, but is preferably set at 200 nm or less, because even if the thickness is set as to be thicker than 200 nm, the amount of zinc at the time of being dissolved wastefully increases, and only the cost increases and the treatment time period becomes long.

The zinc-containing thick film layer can be dissolved by immersing the above described substrate which has been electrolytically degreased, for instance, in an acid solution of 10 to 30% sulfuric acid; and adjusting an immersion time period. For instance, when the thickness of the zinc-containing thick film layer having a thickness of 100 nm is decreased to the thickness of 50 nm or less and thereby the zinc-containing layer is formed, it is preferable to set the immersion time period at 20 seconds or longer and shorter than 40 seconds; when the thickness is decreased to the thickness of 30 nm or less, to set at 40 seconds or longer and shorter than 50 seconds; and when the thickness is decreased to the thickness of 15 nm or less, to set at 50 seconds or longer and shorter than 60 seconds. In addition, when the zinc-containing thick film layer having a thickness of 100 nm is completely removed, it is preferable to set the immersion time period at 60 seconds or longer. Incidentally, these conditions need to be appropriately adjusted according to the conditions of the plating bath and the substrate.

Incidentally, the second surface activation treatment step is not limited to a method of forming the zinc-containing thick film layer with the use of the zinc substitution method and then controlling the thickness thereof to 50 nm or less by partially dissolving the zinc-containing layer, as has been described above, but can be achieved, for instance, by various methods such as a method of mechanically polishing and removing the zinc-containing thick film layer after zincate treatment, and a method of directly forming the plating by a dry process such as vapor deposition and sputtering, as other methods.

### (First surface activation treatment step)

After the electrolytic degreasing step has been conducted, or after the second surface activation treatment step has been conducted in addition to the electrolytic degreasing step, the first surface activation treatment step is conducted. The first surface activation treatment step is a new activation treatment step different from a conventional activation treatment, and is the most important step in the steps for producing the surface-treated material of the present invention.

Specifically, it has been considered that it is difficult for the conventional film forming technique to form a surface treatment film (plating film) having adequate adhesiveness particularly on the conductive substrate 2 which is a base metal having a high ionization tendency when a zinc-containing layer (in particular, zincate treatment layer) does not exist; but in the present invention, the oxide film which stably exists on the surface of the conductive substrate 2 can be effectively removed by conducting the first surface activation treatment step, even if the zinc-containing layer which contains zinc as a main component is not formed by zincate treatment or the like, and even if the surface treatment film (for instance, nickel plating layer) is formed directly on the conductive substrate, metal atoms (for instance, aluminum atoms) forming the conductive substrate and metal atoms (for instance, nickel atoms) forming the surface treatment film can directly bond to each other without through the oxygen atoms; and as a result, the surface treatment film 4 having the adequate adhesiveness can be simply formed on the conductive substrate 2.

In the first surface activation treatment step, it is preferable to treat the surface of the conductive substrate 2 by using an activation treatment liquid that contains 10 to 500 ml/L of any one acid solution which is selected from among sulfuric acid, nitric acid, hydrochloric acid, hydrofluoric acid and phosphoric acid, and 0.1 to 500 g/L (in terms of metal content of nickel or cobalt) of nickel compounds which include nickel sulfate, nickel nitrate, nickel chloride and nickel sulfamate, or cobalt compounds which include cobalt sulfate, cobalt nitrate, cobalt chloride and cobalt sulfamate, at a treatment temperature of 20 to 60°C, at a current density of 0.5 to 20 A/dm², and for a treatment time period of 1 to 300 seconds. By doing in this way, the reaction on the surface of the substrate is limited to a cathode reaction, and a dense film can be formed.

### (Surface treatment film forming step)

After the first surface activation treatment step has been conducted, a surface treatment film forming step is conducted.

The formation of the surface treatment film is formed of at least one metal layer, and each of the metal layers can be formed by electrolytic plating or electroless plating any of which is a wet plating method, according to the purpose of imparting characteristics to the surface-treated material. Tables 2 to 11 illustrate plating bath compositions and plating conditions at the time when the metal layer is formed by nickel (Ni) plating, cobalt (Co) plating, copper (Cu)plating, tin (Sn) plating, silver (Ag) plating, silver (Ag)-tin (Sn) alloy plating, silver (Ag)-palladium (Pd) alloy plating, gold (Au) plating, palladium (Pd) plating and rhodium (Rh) plating, respectively. Incidentally, when a metal layer forming the surface treatment film, in particular, the nickel plating layer is formed as an underlying (metal) layer, the thickness thereof is preferably set in a range of 0.2 µm or more and 2.0 µm or less, more preferably of 0.2 µm or more and 1.5 µm or less, further preferably of 0.2 µm or more and 1.0 µm or less, and most preferably of 0.2 µm or more and 0.5 µm or less. When the thickness of the nickel plating layer is less than 0.2 µm, the nickel plating layer cannot sufficiently inhibit the diffusion of zinc in the zinc-containing layer having a thickness of 50 nm or less, and contact resistance at 200°C and solder wettability tend to deteriorate; and in addition, when the thickness exceeds 2.0 µm, the zinc in the zinc-containing layer having a thickness of 50 nm or less resists being diffused, and the deterioration in the contact resistance at 200°C and the solder wettability can be inhibited, but bending workability tends to be inferior. By making the zinc-containing layer extremely thin, the nickel layer can sufficiently inhibit the appearance of the zinc-containing layer on the material surface due to the diffusion of zinc, even when the plating thickness thereof is made thinner than the conventional one, and the contact resistance and the solder wettability do not deteriorate. In addition, conventionally, there has been such a problem that when the nickel layer is thin, the corrosion progresses along the zinc-containing layer in the salt water environment due to the formation of a non-uniform plating film and the formation of pinholes, but it has become possible to make the nickel layer thin by making the zinc-containing layer extremely thin.

**[Table 2]**

| Nickel plating | | | |
|---|---|---|---|
| Plating bath composition | | Bath temperature | Current density |
| Component | Concentration (g/L) | (°C) | (A/dm²) |
| Ni(SO₃NH₂)₂·4H₂O | 500 | 50 | 10 |
| NiCl₂ | 30 | | |
| H₃BO₃ | 30 | | |

**[Table 3]**

| Cobalt plating | | | |
|---|---|---|---|
| Plating bath composition | | Bath temperature | Current density |
| Component | Concentration (g/L) | (°C) | (A/dm²) |
| Co(SO₃NH₂)₂·4H₂O | 500 | 50 | 10 |
| CoCl₂ | 30 | | |
| H₃BO₃ | 30 | | |

**[Table 4]**

| Copper plating | | | |
|---|---|---|---|
| Plating bath composition | | Bath temperature | Current density |
| Component | Concentration (g/L) | (°C) | (A/dm²) |
| CuSO₄·5H₂O | 250 | 40 | 6 |
| H₂SO₄ | 50 | | |
| NaCl | 0.1 | | |

**[Table 5]**

| Tin plating | | | |
|---|---|---|---|
| Plating bath composition | | Bath temperature | Current density |
| Component | Concentration (g/L) | (°C) | (A/dm²) |
| SnSO₄ | 80 | 30 | 2 |
| H₂SO₄ | 80 | | |

**[Table 6]**

| Silver plating | | | |
|---|---|---|---|
| Plating bath composition | | Bath temperature | Current density |
| Component | Concentration (g/L) | (°C) | (A/dm²) |
| AgCN | 50 | 30 | 1 |
| KCN | 100 | | |
| K₂CO₃ | 30 | | |

**[Table 7]**

| Silver-tin plating | | | |
|---|---|---|---|
| Plating bath composition | | Bath temperature | Current density |
| Component | Concentration (g/L) | (°C) | (A/dm²) |
| AgCN | 10 | 40 | 1 |
| K₂Sn(OH)₆ | 80 | | |
| KCN | 100 | | |
| NaOH | 50 | | |

**[Table 8]**

| Silver-palladium plating | | | |
|---|---|---|---|
| Plating bath composition | | Bath temperature | Current density |
| Component | Concentration (g/L) | (°C) | (A/dm²) |
| KAg(CN)₂ | 20 | 40 | 0.5 |
| PdCl₂ | 25 | | |
| K₄O₇P₂ | 60 | | |
| KSCN | 150 | | |

**[Table 9]**

| Gold plating | | | |
|---|---|---|---|
| Plating bath composition | | Bath temperature | Current density |
| Component | Concentration (g/L) | (°C) | (A/dm²) |
| KAu(CN)₂ | 14.6 | 40 | 1 |
| C₆H₈O₇ | 150 | | |
| K₂C₆H₄O₇ | 180 | | |

**[Table 10]**

| Palladium plating | | | |
|---|---|---|---|
| Plating bath composition | | Bath temperature | Current density |
| Component | Concentration | (°C) | (A/dm²) |
| Pd(NH₃)₂Cl₂ | 45g/L | 60 | 5 |
| NH₄OH | 90ml/L | | |
| (NH₄)₂SO₄ | 50g/L | | |
| Parasiguma brightener (made by Matsuda Sangyo Co., Ltd.) | 10ml/L | | |

**[Table 11]**

| Rhodium plating | | | |
|---|---|---|---|
| Plating liquid | | Bath temperature | Current density |
| RHODEX (trade name, made by Electroplating Engineers of Japan Ltd.) | | 50°C | 1.3A/dm² |

The production method of the present invention can form a plating film excellent in adhesiveness to a conductive substrate by conducting each of the above described steps, and besides, can produce a surface-treated material which can inhibit the deterioration of the adhesiveness, contact resistance and solder wettability, particularly in high-temperature (for instance, 200°C) use environment without deteriorating the bending workability, in comparison with a conventional surface-treated material in which a zinc-containing layer (in particular, zincate treatment layer) having a thickness of approximately 100 nm is interposed, by a simple method.

The surface-treated material of the present invention can use aluminum, an aluminum alloy and the like which have lighter weight, as a substrate (conductive substrate), in place of iron, an iron alloy, copper, a copper alloy or the like which have been conventionally used, and can be applied to various products such as a terminal, a connector, a bus bar, a lead frame, a medical member (for instance, guide wire for catheter, stent, artificial joint and the like), a shield case (for instance, for preventing electromagnetic waves), a coil (for instance, for motor), an accessory (for instance, necklace, earring, ring and the like), and a contact switch. This is because the surface-treated material has been formed so as to be capable of withstanding the same use environment as that of a conventional product group formed of iron, an iron alloy, copper and a copper alloy, by making it possible to activate the surface of the substrate without making a conventional thick zinc-containing layer (in particular, zincate treatment layer) of approximately 100 nm exist between the substrate and the surface treatment film; and can be used in various products such as wire harness for automotive applications and housing for aerospace applications, which are particularly required to reduce the weight.

It is to be noted that the above description merely illustrates some embodiments of the present invention, and various modifications can be made in the claims.

### [Examples]

Thereafter, a surface-treated material according to the present invention was produced by way of trial, and the performance thereof was evaluated; and accordingly it will be described below.

### (Inventive Examples 1 to 21)

An electric degreasing step was conducted on aluminum-based substrates (size of 0.2 mm × 30 mm × 30 mm) shown in Table 12, under the above described conditions; then, as for Inventive Examples 1 to 4, 6 to 11 and 15 to 20, the zincate treatment was carried out which formed the above described second surface activation treatment, according to the zinc substitution treatment condition shown in Table 1; thereby the zinc-containing thick film layers were formed so as to have thicknesses shown in Table 12, and were partially dissolved, respectively; and the zinc-containing layers are formed so as to have thicknesses shown in Table 12, respectively. Inventive Examples 5, 12 to 14 and 21 are not subjected to the second surface activation treatment (zinc-containing layer is not formed). Thereafter, as for Inventive Examples 1 to 21 (Except for Inventive Example 14), the first surface activation treatment was conducted with the use of an activation treatment liquid which contained 10 to 500 ml/L of an acid solution including sulfuric acid, nitric acid, hydrochloric acid, hydrofluoric acid and phosphoric acid, and 0.1 to 500 g/L (in terms of metal content of nickel) of nickel compounds including nickel sulfate, nickel chloride and nickel nitrate, under conditions of a treatment temperature of 20 to 60°C, a current density of 0.5 to 20 A/dm² and a treatment time period of 30 seconds. In addition, as for Inventive Example 14, the first surface activation treatment was conducted with the use of an activation treatment liquid which contained 10 to 500 ml/L of an acid solution including sulfuric acid, nitric acid, hydrochloric acid, hydrofluoric acid and phosphoric acid, and 5 g/L (in terms of metal content of cobalt) of cobalt compounds including cobalt sulfate, cobalt chloride and cobalt nitrate, under conditions of a treatment temperature of 20 to 60°C, a current density of 0.5 to 20 A/dm² and a treatment time period of 30 seconds. After that, surface treatment films were formed which includes two or three metal layers formed with the thicknesses shown in Table 12 by the above described surface treatment film forming step, respectively, and the surface-treated materials were prepared. Incidentally, the formation conditions of each of the metal layers forming the surface treatment film were conducted under the plating conditions shown in Tables 2 to 11.

### (Comparative Example 1)

In Comparative Example 1, a surface-treated material was produced on the same conditions as in Inventive Example 1 except that the thickness of the zinc-containing layer was as thick as 55 nm, and was prepared.

### (Conventional Examples 1 to 4)

In Conventional Examples 1 to 4, the electric degreasing step was conducted on the aluminum substrates (size of 0.2 mm × 30 mm × 30 mm) shown in Table 13 under the above described conditions; and after that, in Conventional Examples 1 and 2, a conventional zinc substitution treatment (zincate treatment) is conducted and thereby the zinc-containing layers are formed so as to have thicknesses shown in Table 12, respectively. Incidentally, in Conventional Example 3, the conventional zinc substitution treatment (zincate treatment) was not conducted, and Conventional Example 4 was subjected to immersion treatment in a nickel plating liquid which contains hydrofluoric acid and a nickel salt shown in Table 13. After that, in any of Conventional Examples 1 to 4, the first surface activation treatment was not conducted, and the surface treatment films were formed which includes two metal layers that were formed with the thicknesses shown in Table 12, respectively, by the above described surface treatment film forming step; and surface-treated materials were prepared.

**[Table 12]**

| Test No. | Type of base material (substrate) | Second surface activation treatment | | | Presence or absence of first surface activation treatment | Surface treatment film | | | | | | Surface-treated material |
|---|---|---|---|---|---|---|---|---|---|---|---|---|
| | | Presence or absence of treatment | Thickness of zinc-containing thick film layer (nm) | Thickness of zinc-containing layer (nm) | | Underlying layer | | Intermediate layer | | Outermost surface layer | | Number of times when the maximum value of the intensity ratio of zinc to the main component of the surface treatment film exceeded 1/4, at the time when a line analysis of each component was performed in a specific detection region (times) |
| | | | | | | Type | Thickness (µm) | Type | Thickness (µm) | Type | Thickness (µm) | |
| Inventive Example 1 | A1100 | Present | 110 | 50 | Present | Ni | 0.2 | - | - | Au | 0.1 | 10 |
| Inventive Example 2 | A1100 | Present | 110 | 25 | Present | Ni | 0.2 | - | - | Au | 0.1 | 10 |
| Inventive Example 3 | A1100 | Present | 110 | 10 | Present | Ni | 0.2 | - | - | Au | 0.1 | 9 |
| Inventive Example 4 | A1100 | Present | 110 | 0 | Present | Ni | 0.2 | - | - | Au | 0.1 | 0 |
| Inventive Example 5 | A1100 | Absent | 0 | 0 | Present | Ni | 0.2 | - | - | Au | 0.1 | 0 |
| Inventive Example 6 | A5052 | Present | 100 | 25 | Present | Ni | 0.2 | - | - | Au | 0.1 | 10 |
| Inventive Example 7 | A6061 | Present | 100 | 25 | Present | Ni | 0.2 | - | - | Au | 0.1 | 10 |
| Inventive Example 8 | A1100 | Present | 150 | 50 | Present | Ni | 0.2 | - | - | Au | 0.1 | 10 |
| Inventive Example 9 | A1100 | Present | 80 | 50 | Present | Ni | 0.2 | - | - | Au | 0.1 | 10 |
| Inventive Example 10 | A1100 | Present | 50 | 10 | Present | Ni | 0.2 | - | - | Au | 0.1 | 9 |
| Inventive Example 11 | A1100 | Present | 25 | 10 | Present | Ni | 0.2 | - | - | Au | 0.1 | 10 |
| Inventive Example 12 | A1100 | Absent | 0 | 0 | Present | Ni | 0.5 | - | - | Au | 0.1 | 0 |
| Inventive Example 13 | A1100 | Absent | 0 | 0 | Present | Ni | 1.0 | - | - | Au | 0.1 | 0 |
| Inventive Example 14 | A1100 | Absent | 0 | 0 | Present | Co | 0.2 | - | - | Au | 0.1 | 0 |
| Inventive Example 15 | A1100 | Present | 110 | 10 | Present | Ni | 0.2 | - | - | Sn | 0.5 | 9 |
| Inventive Example 16 | A1100 | Present | 110 | 10 | Present | Ni | 0.2 | - | - | Ag | 0.5 | 8 |
| Inventive Example 17 | A1100 | Present | 110 | 10 | Present | Ni | 0.2 | - | - | Ag-Sn | 0.5 | 10 |
| Inventive Example 18 | A1100 | Present | 110 | 10 | Present | Ni | 0.2 | - | - | Ag-Pd | 0.5 | 10 |
| Inventive Example 19 | A1100 | Present | 110 | 10 | Present | Ni | 0.2 | - | - | Pd | 0.1 | 9 |
| Inventive Example 20 | A1100 | Present | 110 | 10 | Present | Ni | 0.2 | - | - | Rh | 0.1 | 10 |
| Inventive Example 21 | A1100 | Absent | 0 | 0 | Present | Ni | 0.2 | Pd | 0.02 | Au | 0.01 | 0 |
| Comparative Example 1 | A1100 | Present | 110 | 55 | Present | Ni | 0.2 | - | - | Au | 0.1 | 10 |
| Conventional Example 1 | A1100 | Conventional zincate treatment | | 110 | Absent | Ni | 0.2 | - | - | Au | 0.1 | 10 |
| Conventional Example 2 | A1100 | Conventional zincate treatment | | 110 | Absent | Ni | 2.0 | - | - | Au | 0.1 | 10 |
| Conventional Example 3 | A1100 | No zincate treatment | | 0 | Absent | Ni | 2.0 | - | - | Au | 0.1 | 0 |
| Conventional Example 4 | A1100 | Ammonium fluoride / nickel plating | | 0 | Absent | Ni | 0.2 | - | - | Au | 0.1 | 0 |

**[Table 13]**

| Nickel plating liquid containing hydrofluoric acid and nickel salt | | | |
|---|---|---|---|
| Plating bath composition | | Bath temperature | pH |
| Component | Concentration | (°C) | |
| Ammonium fluoride | 0.50% | 30 | 4 |
| Nickel sulfate | 50ppm | | |
| pH adjusting agent (acid) hydrochloric acid | 1% | | |
| pH adjusting agent (alkali) ammonia | Adjustment amount | | |
| Polyoxyalkylene alkyl ether (surfactant) | 100ppm% | | |
| ppm and % in the table represent weight ppm and wt%, respectively, and the remaining is water. | | | |

### (Evaluation method)

### <Line analysis by STEM-EDX>

Five points which were aligned on a straight line at intervals of 50 µm were determined in two different positions at arbitrary points on the substrate, and FIB processing was conducted at each of the 10 points. After the FIB processing, an area of 100 nm × 100 nm was subjected to a surface analysis with the use of STEM-EDX (STEM of which the spherical aberration was corrected by JEM-ARM 200 Thermal FE made by JEOL Ltd.) with a resolution of 1 nm/pixel or more so that the interface between the conductive substrate and the surface treatment film came to the vicinity of the center. Furthermore, in the central portion of thus obtained composition mapping image, the line analysis was conducted in a range of 70 nm or more from the conductive substrate side to the surface treatment film side, and in thus obtained profile of detection intensity of each component of the surface-treated material, the number of times when the maximum value of the intensity ratio of the zinc to the main component of the surface treatment film exceeds 1/4, in such a range that the intensity of the main component of the surface treatment film became equal to or higher than the intensity of the main component of the conductive substrate; and the result is shown in Table 12.

### <Adhesiveness to substrate>

As for the adhesiveness to the substrate, a peeling test was conducted on a plated sample and the contact resistance measurement and the adhesiveness of the plating were examined. The peeling test was tested according to a tape test method defined in JIS H 8504:1999. Table 14 shows the evaluation results. Incidentally, as for the adhesiveness shown in Table 14, two types of samples were prepared for every prepared surface-treated material, which were in such a state that surface treatment film was just formed (as plated) and in such a state that the surface treatment film was subjected to heat treatment at 200°C in the atmosphere for 24 hours, and were subjected to the peeling test. The plating adhesiveness was evaluated as "excellent" when the peeling of the plating was not observed and the ratio of the contact area to the test area was 100%, was evaluated as "good" when the ratio was 95% or more and less than 100%, was evaluated as "fair" when the ratio was 85% or more and less than 95%, was evaluated as "poor" when the ratio was 70% or more and less than 85%, and was evaluated as "unacceptable" when the ratio was less than 70%; and in the present example, "excellent", "good" and "fair" were evaluated as acceptable.

### <Measurement method of contact resistance>

As for the contact resistance, two types of samples were prepared for every prepared surface-treated material, which were in such a state that the surface treatment film was just formed (as plated) and in such a state that the surface treatment film was subjected to heat treatment at 200°C in the atmosphere for 24 hours, and the contact resistances in an initial period and after heat treatment were measured with the use of a 4-terminal method. Under the measurement conditions of Ag probe radius R = 2 mm and a load of 0.1 N, a resistance value when an electric current of 10 mA was passed was measured ten times, and the average value was calculated. Table 14 shows the evaluation results. Incidentally, the contact resistance shown in Table 14 was evaluated as "excellent" when the contact resistance was 10 mΩ or less, was evaluated as "good" when the contact resistance exceeded 10 mΩ and was 50 mΩ or less, was evaluated as "fair" when the contact resistance exceeded 50 mΩ and was 100 mΩ or less, and was evaluated as "poor" when the contact resistance exceeded 100 mΩ; and in the present example, "excellent", "good" and "fair" were evaluated as acceptable.

### <Solder wettability>

As for solder wettability, two types of samples were prepared for every prepared surface-treated material, which were in such a state that the surface treatment film was just formed (as plated) and in such a state that the surface treatment film was subjected to heat treatment at 200°C in the atmosphere for 24 hours, and solder wetting time periods were evaluated with the use of a solder checker (SAT-5100 (trade name, made by RESCA, Inc.)). Table 14 shows the evaluation results. Incidentally, the solder wettability shown in Table 14 was measured under measurement conditions of which the details are as follows, and was evaluated as "excellent" when the solder wetting time period was shorter than 3 seconds, was evaluated as "good" when the solder wetting time period was 3 seconds or longer and shorter than 5 seconds, was evaluated as "fair" when the solder wetting time period was 5 seconds or longer and shorter than 10 seconds and was evaluated as "poor" when the surface treatment material was immersed for 10 seconds but was not bonded; and in the present example, "excellent", "good", and "fair" were evaluated as acceptable.
Type of solder: Sn-3Ag-0.5Cu
Temperature: 250°C
Size of test piece: 10 mm × 30 mm
Flux: isopropyl alcohol - 25% rosin
Immersion speed: 25 mm/sec.
Immersion time period: 10 seconds
Immersion depth: 10 mm

### <Bending workability>

As for the bending workability, a V-bending test at a bending radius of 0.5 mm was conducted on each of the samples in a direction perpendicular to a rolling stripe (rolling direction); and then the top portion thereof was observed with a microscope (VHX 200: made by Keyence Corporation) at an observation magnification of 200 times, and was evaluated. Table 14 shows the evaluation results. The bending workability shown in Table 14 was evaluated as "excellent" when cracking were not observed at all, was evaluated as "good" when not cracking but wrinkles occurred, was evaluated as "fair" when slight cracking occurred, and was evaluated as "poor" when comparatively large cracking occurred; and in the present example, "excellent", "good" and "fair" were evaluated as acceptable.

**[Table 14]**

| Test No. | Performance evaluation | | | | | | |
|---|---|---|---|---|---|---|---|
| | Adhesiveness | | Contact resistance | | Solder wettability | | Bending workability |
| | No heat treatment | After heat treatment (200°C,24h) | No heat treatment | After heat treatment (200°C,24h) | No heat treatment | After heat treatment (200°C,24h) | |
| Inventive Example 1 | Excellent | Fair | Excellent | Fair | Excellent | Fair | Excellent |
| Inventive Example 2 | Excellent | Good | Excellent | Good | Excellent | Good | Excellent |
| Inventive Example 3 | Excellent | Good | Excellent | Excellent | Excellent | Excellent | Excellent |
| Inventive Example 4 | Excellent | Excellent | Excellent | Excellent | Excellent | Excellent | Excellent |
| Inventive Example 5 | Excellent | Excellent | Excellent | Excellent | Excellent | Excellent | Excellent |
| Inventive Example 6 | Excellent | Good | Excellent | Good | Excellent | Good | Excellent |
| Inventive Example 7 | Excellent | Good | Excellent | Good | Excellent | Good | Excellent |
| Inventive Example 8 | Excellent | Fair | Excellent | Fair | Excellent | Fair | Excellent |
| Inventive Example 9 | Fair | Fair | Excellent | Fair | Excellent | Fair | Excellent |
| Inventive Example 10 | Fair | Fair | Excellent | Excellent | Excellent | Excellent | Excellent |
| Inventive Example 11 | Fair | Fair | Excellent | Excellent | Excellent | Excellent | Excellent |
| Inventive Example 12 | Excellent | Excellent | Excellent | Excellent | Excellent | Excellent | Good |
| Inventive Example 13 | Excellent | Excellent | Excellent | Excellent | Excellent | Excellent | Fair |
| Inventive Example 14 | Excellent | Excellent | Excellent | Excellent | Excellent | Excellent | Excellent |
| Inventive Example 15 | Excellent | Good | Excellent | Excellent | Excellent | Excellent | Excellent |
| Inventive Example 16 | Excellent | Good | Excellent | Excellent | Excellent | Excellent | Excellent |
| Inventive Example 17 | Excellent | Good | Excellent | Good | Excellent | Excellent | Excellent |
| Inventive Example 18 | Excellent | Good | Excellent | Excellent | Excellent | Excellent | Excellent |
| Inventive Example 19 | Excellent | Good | Excellent | Good | Excellent | Excellent | Excellent |
| Inventive Example 20 | Excellent | Good | Excellent | Good | Excellent | Excellent | Excellent |
| Inventive Example 21 | Excellent | Excellent | Excellent | Excellent | Excellent | Excellent | Excellent |
| Comparative Example 1 | Excellent | Fair | Excellent | Poor | Excellent | Poor | Excellent |
| Conventional Example 1 | Excellent | Fair | Excellent | Poor | Excellent | Poor | Excellent |
| Conventional Example 2 | Excellent | Fair | Excellent | Good | Excellent | Good | Poor |
| Conventional Example 3 | Unacceptable | Unacceptable | Excellent | Poor | Poor | Poor | Poor |
| Conventional Example 4 | Poor | Poor | Excellent | Poor | Excellent | Poor | Good |

It is understood from the results shown in Table 14 that in any of Inventive Examples 1 to 21, the adhesiveness to the substrate is adequate, deterioration in contact resistance and solder wettability at 200°C is also inhibited and bending workability is adequate; and, in particular, in Inventive Examples 3 to 5, 14 to 16, 18 and 21, any performance is excellent in good balance.

On the other hand, in Conventional Example 1, the first surface activation treatment step was not conducted, and besides, a zinc-containing layer as thick as 110 nm was formed by the conventional zincate treatment; and accordingly the contact resistance and the solder wettability at 200°C were inferior. In addition, in Conventional Example 2, the nickel plating layer which was an underlying layer was thickly formed in comparison with that of Conventional Example 1, and accordingly the deterioration in the contact resistance and the solder wettability at 200°C are inhibited, but the bending workability is inferior. Furthermore, in Conventional Example 3, both of the first surface activation treatment step and the conventional zincate treatment were not conducted, and accordingly the adhesiveness and the bending workability were inferior, and the contact resistance and the solder wettability at 200°C were also inferior. Furthermore, Conventional Example 4 was not subjected to the first surface activation treatment but was treated with the conventional nickel plating liquid containing the hydrofluoric acid and the nickel salt, accordingly the adhesiveness was inferior, and the adhesiveness, the contact resistance and the solder wettability at 200°C were also inferior. In addition, in Comparative Example 1, the thickness of the zinc-containing layer formed in the second surface activation treatment step was as thick as 55 nm, and accordingly the contact resistance and solder wettability at 200°C were inferior.

### Industrial Applicability

According to the present invention, it has become possible to provide a surface-treated material that can inhibit deterioration in characteristics on the surface of the surface treatment film, in particular, deterioration in the adhesiveness, contact resistance and solder wettability in high-temperature (for instance, 200°C) use environment, without deterioration in bending workability, in comparison with a conventional surface-treated material in which a zinc layer (zincate treatment layer) having a thickness, for instance, of approximately 100 nm between the conductive substrate and the plating film; and as a result, has high long-term reliability while keeping characteristics after the surface treatment film has been formed: a method for producing the surface-treated material: and various components that are formed by using the surface-treated material.

### List of Reference Signs

1, 1A, 1B and 1C surface-treated material
2 Conductive substrate (or substrate)
3 Zinc-containing layer
4 Surface treatment film

## Claims

1. A surface-treated material comprising a conductive substrate, and a surface treatment film which includes at least one layer of metal layers and is formed on the conductive substrate, wherein
the surface treatment film is a wet plating film; is formed on a whole surface or a part of the conductive substrate through a zinc-containing layer that contains zinc as a main component and has a thickness of 50 nm or less, or is formed on the conductive substrate without through the zinc-containing layer; and a ratio of a contact area to a test area is 85% or more as measured according to a tape test method defined in JIS H 8504: 1999.

2. A surface-treated material comprising a conductive substrate, and a surface treatment film which includes at least one layer of metal layers and is formed on the conductive substrate, wherein
in cross-sectional observation of the surface-treated material, when portions between a portion of the conductive substrate and a portion of the surface treatment film are subjected to a line analysis with the use of STEM-EDX, and an obtained profile of detection intensity of each component of the surface-treated material is viewed, a maximum value of an intensity ratio of zinc to a main component of the surface treatment film is 1/4 or less, in a specific analysis range in which the intensity of the main component of the surface treatment film is equal to or higher than the intensity of the main component of the conductive substrate; and a ratio of a contact area to a test area is 85% or more as measured according to a tape test method defined in JIS H 8504: 1999.

3. The surface-treated material according to claim 1 or 2, wherein the conductive substrate is aluminum or an aluminum alloy.

4. The surface-treated material according to any one of claims 1 to 3, wherein each of the metal layers forming the surface treatment film is formed of any one selected from the group consisting of nickel, a nickel alloy, cobalt, a cobalt alloy, copper, a copper alloy, tin, a tin alloy, silver, a silver alloy, gold, a gold alloy, platinum, a platinum alloy, rhodium, a rhodium alloy, ruthenium, a ruthenium alloy, iridium, an iridium alloy, palladium and a palladium alloy.

5. The surface-treated material according to any one of claims 1 to 4, wherein the surface treatment film comprises two or more metal layers.

6. A method for producing a surface-treated material according to any one of claims 1 to 5, comprising:
a first surface activation treatment step of treating a surface of the conductive substrate, with the use of an activation treatment liquid that contains 10 to 500 mL/L of any one acid solution which is selected from among sulfuric acid, nitric acid, hydrochloric acid, hydrofluoric acid and phosphoric acid, and 0.1 to 500 g/L (in terms of metal content of nickel or cobalt) of nickel compounds which include nickel sulfate, nickel nitrate, nickel chloride and nickel sulfamate, or cobalt compounds which include cobalt sulfate, cobalt nitrate, cobalt chloride and cobalt sulfamate, at a treatment temperature of 20 to 60°C, at a current density of 0.5 to 20 A/dm², and for a treatment time period of 1 to 300 seconds,
prior to forming the surface treatment film on the conductive substrate by a wet plating method.

7. The method for producing the surface-treated material according to claim 6, further comprising:
a second surface activation treatment step of temporarily forming a zinc-containing thick film layer having a thickness of 100 nm or more on the surface of the conductive substrate by a zinc substitution method, then dissolving the zinc-containing thick film layer in a range of 50 nm or more, and thereby reducing the thickness to a range of 50 nm or less to form the zinc-containing layer, or completely removing the zinc-containing thick film layer,
prior to performing the first surface activation treatment step.

8. A terminal formed with the use of the surface-treated material according to any one of claims 1 to 5.

9. A connector formed with the use of the surface-treated material according to any one of claims 1 to 5.

10. A bus bar formed with the use of the surface-treated material according to any one of claims 1 to 5.

11. A lead frame formed with the use of the surface-treated material according to any one of claims 1 to 5.

12. A medical member formed with the use of the surface-treated material according to any one of claims 1 to 5.

13. A shield case formed with the use of the surface-treated material according to any one of claims 1 to 5.

14. A coil formed with the use of the surface-treated material according to any one of claims 1 to 5.

15. A contact switch formed with the use of the surface-treated material according to any one of claims 1 to 5.
